# EUROPEAN PATENT SPECIFICATION

(11) **EP 1 969 580 B1**
(45) Date of publication and mention of the grant of the patent: **14.07.2010**
(21) Application number: 06824616.4
(22) Date of filing: 06.12.2006
(51) Int. Cl.: G09F 15/00

(54) **A DISPLAY MEANS**
ANZEIGEMITTEL
MOYEN D'AFFICHAGE

(30) Priority: 08.12.2005 SE 0502730
(43) Date of publication of application: 17.09.2008
(73) Proprietor: Expand International AB, 120 30 Stockholm (SE)
(72) Inventor: ZARELIUS, Christer, S-114 52 Stockholm (SE)
(74) Representative: Holmberg, Magnus
(86) International application number: PCT/SE2006/050550
(87) International publication number: WO 2007/067143

(56) References cited:
- EP-A1- 1 109 144
- WO-A-2005/043235
- DE-A1- 19 707 516
- DE-U1- 20 310 412
- US-A- 1 842 274
- US-A- 2 386 450
- US-A- 2 530 877
- US-A1- 2002 050 083
- US-A1- 2005 028 943
- US-A1- 2005 028 943

## Description

### Technical field of the invention

The present invention relates generally to a display means and, for instance, more particularly to a display means that includes a readily collapsed and readily erected stand, where the stand used can be adapted to secure a flexible information-presenting screen when in its erected state, and by flexible being meant that the screen can be rolled up onto and unrolled from a bobbin or a rod, normally in the form of a hollow-cylindrical body.

### Background of the invention

A telescopic pole with a lock means can be used for holding the printed graphics/screen in a display means (roll up/retractable banner stands) (e.g. Expand QuickScreen). The pole can e.g. be secured to a foot arranged on the display means with a threaded connection. This threaded connection implies a number of disadvantageous. Firstly, a threaded connection can easily get damaged, especially when it is assembled and disassembled many times, as is the case with this type of display means. Secondly, if the threaded connection gets too damaged it will not work at all. Thirdly, normally you notice this type of damage when it is too late, e.g. when you are going to assemble the display means at an exhibition. In the worst case, you are not able to show your screen. Another disadvantage is that it is difficult for a person, when assembling the display means, to screw a pole with a thread in a foot on the floar, i.e. the hands which controls the screwing of the pole are normally situated a quite "long" distance from the threaded connection.

The patent document US 2005/0028943 relates to a screen and discloses the preamble of claim 1. The screen is constructed to have a screen case, a support member fastened to one side of the screen case and a reel pivotally mounted inside the screen case and rolling up a screen body. The reel has a flat inside stop face and a plug member is fixedly fastened to one end of the reel. An axle is suspended inside the reel, the axle having a first end fixedly fastened to the screen case and a second end fastened pivotally with the plug member. A spring member is sleeved onto the axle inside the reel, the spring member having a first end terminating in a projecting portion stopped at the flat inside stop face of the reel and a second end fixedly connected to one end of the axle.

The patent document DE 197 07 516 A1 relates to a display means that includes a readily collapsed and readily erected stand, where the stand used can be adapted to secure a flexible information-presenting screen when in its erected state.

The patent document US 2, 386, 450 relates to portable and collapsible stands which are adapted to support screens for the reception thereon of light-projected motion and still pictures and for supporting maps and pictorial reproductions of various kind and nature. Furthermore, it afford adjustment of the screen both as to height and area for the proper framing of the projected picture at various desirable elevations.

The patent document US 2, 530, 877 relates to a portable picture screen support comprising a base having a centre member for holding a screen standard in vertical position and a pair of laterally spaced brackets each for receiving and holding one end portion of a picture screen casing, said center member and brackets being in a common plane and connected together by transversely extending arms, an extensible standard having a plurality of telescoping elements one of which is mounted on said center member, a lifting handle fixedly mounted on each of the other telescoping members, and a releasable means to lock said other telescoping members in extended position respectively.

The patent document WO 2005/043235 A1 relates to a portable screen device, comprising a casing having a longitudinally extending opening part formed in the upper surface thereof and formed of longitudinally extending and separable first and second case members, a spring roll rotatable fitted to the casing, a screen taken in by the spring roll in storing and let out from the opening part in use, a top bar fixed to one end of the screen and used also as a cover body to close the opening part in storage, and an extendable column having one end erectable pivoted at the side center part of the casing and, in an erected state, holding the let-out screen in a stretched state.

### Summary of the invention

It is an object of the present invention to solve the above and below mentioned problems. This is achieved with a display means according to Claim 1.The display means comprises a stand adapted to secure a screen. The stand comprises a first part which supports against an underlying supportive surface and comprises a bobbin enclosed in a cavity in the first part. The screen can be wound onto and withdrawn from the bobbin. The stand also comprises a support means, which in a support mode is arranged perpendicularly in relation to the lengthwise direction of the first part, and supports against the surface. The stand also comprises a foldable pole means or a telescopic pole means comprising an inner tube and an outer tube, which tubes can be telescopically moved in relation to each other. The stand also comprises a lock means arranged on the inner tube, and operable to releaseably lock the tubes in relation to each other. The stand also comprises a coupling means arranged at a first end of the inner tube, and operable to secure the screen when it is at least partly withdrawn from the bobbin. One of the support means and one end of the outer tube is provided with a recess and the other is provided with a projection, wherein the shapes of the recess and the projection essentially are complementary. The stand also comprises a friction means operable to exert a friction force between the first part and the outer tube when the recess and the projection are fitted together, and the screen is secured by means of the coupling means, whereby the telescopic pole means is held in place by means of tension.

With this solution, the assembling of a display means becomes very simple and user friendly. Furthermore, this solution is not so vulnerable to damages as e.g. a threaded connection.

A further advantage in this context is achieved if said recess is symmetrical in relation to a central axis thereof, and in that a cross section area of said recess perpendicular to said central axis has its maximum value at one end of said recess (62) and decreases when moving along said central axis away from said one end of said recess.

Furthermore, it is an advantage in this context if said recess has a conical shape.

A further advantage in this context is achieved if said recess is provided in said support means.

According to another embodiment, it is an advantage if said recess is provided in said outer tube.

Furthermore, it is an advantage in this context if said friction means is a friction plate.

A further advantage in this context is achieved if said friction plate is affixed on said first part.

According to another embodiment, it is an advantage if said friction plate is affixed on said outer tube.

According to another embodiment, it is an advantage if said friction means is a friction tube affixed on said outer tube.

A further advantage in this context is achieved if said friction tube has an increasing diameter.

Furthermore, it is an advantage in this context if said friction plate is provided with an adjustable threaded connection to either said first part or said outer tube.

It will be noted that the term "comprises/comprising" as used in this description is intended to denote the presence of a given characteristic, step or component, without excluding the presence of one or more other characteristic features, integers, steps, components or groups thereof.

Embodiments of the invention will now be described with reference to the accompanying drawings, in which:

### Brief description of the drawings

Fig. 1 illustrates assembly sequences A-G, applicable to an earlier known display means; and
Fig. 2 is a side view, partially in cross section, of a display means according to the present invention.

### Detailed description

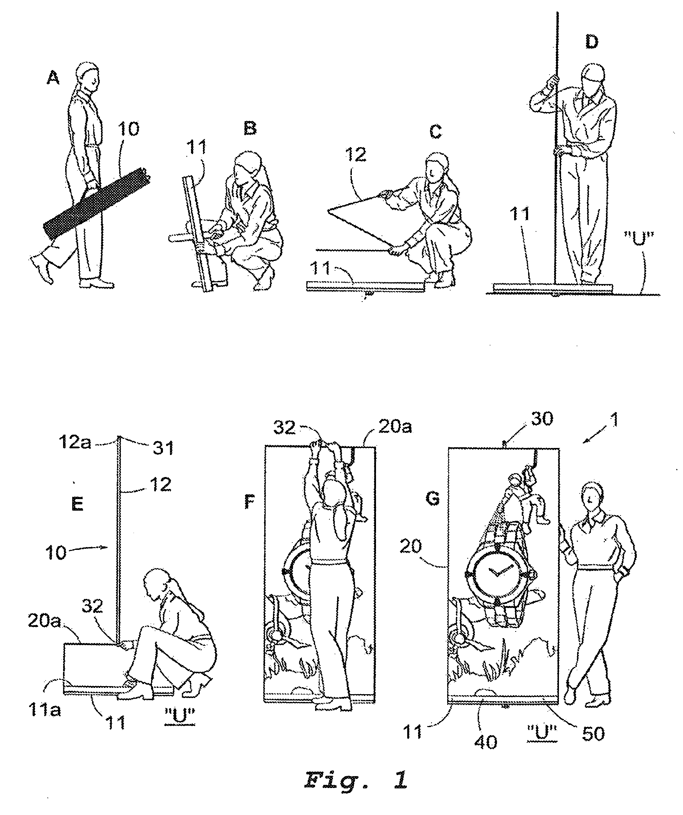

In Fig. 1 there is disclosed a more or less complete assembly sequence with the aid of individual assembly steps referenced A-G of a display means 1, this assembly sequence or erection sequence also being applicable to the display means 1 according to the present invention.

According to step A, the display means 1 comprises a stand 10, which in a fully erected state (steps F, G) firmly supports a screen 20, wherein the stand 10 comprises a first part 11 which supports against an underlying supportive surface U (step D), and further includes a foldable part 12 which, when the stand 10 is erected, extends upwardly from the first part 11.

One upwardly extending end part 12a of the second part 12 (step E) has a first coupling element 31 included in a two-part coupling arrangement 30, wherewith the other coupling element 32 of the coupling arrangement is joined to the screen 20 either directly or indirectly, and orientated in connection with the upper edge part 20a of the screen 20.

The screen 20 can be wound onto and unwound from a bobbin 40 enclosed in a cavity (not shown) located in the first part 11, wherein the bobbin 40 can be actuated by a spring arrangement 50 that includes an associated spring unit.

The spring arrangement 50 is designed to act on the screen 20 with a decreasing force during a screen wind-up phase (the steps from F to E) with the aid of a spring unit consisting of helically twisted or wound metal wire, wherewith the screen 20 is acted upon at an increasing force during an unwinding phase (the steps from E to F).

The spring arrangement 50 is also adapted to act on the screen 20 with a chosen initial power when the screen 20 has been fully wound around the bobbin 40 (in accordance witch the step D).

The first part 11 includes a slot 11 a through which the screen 20 passes so as to be unwound from or wound onto the bobbin 40 present in the cavity.

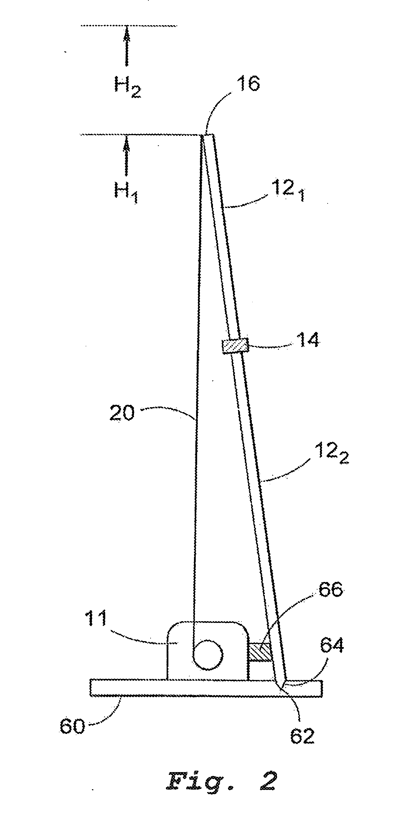

In Fig, 2 there is disclosed a side view, partially in cross section, of a display means 1 according to the present invention. As is apparent in Fig. 2, the stand 10 comprises a telescopic pole means 12, comprising an inner tube 12₁ and an outer tube 12₂, which tubes 12₁, 12₂ telescopically can be moved in relation to each other. The stand 10 also comprises a lock means 14 arranged on the inner tube 12₁, and operable to releasably lock the tubes 12₁, 12₂ in relation to each other. The stand 10 also comprises a coupling means 16 arranged at a first end of the inner tube 12₁, and operable to secure the screen 20, when it is at least partly withdrawn from the bobbin 40. One of the support means 60 and one end of the outer tube 12₂ is provided with a recess 62 and the other is provided with a projection 64, wherein the shapes of the recess 62 and the projection 64 essentially are complementary. The stand 10 also comprises a friction means 66 operable to exert a friction force between the first part 11 and the outer tube 12₂ when the recess 62 and the projection 64 are fitted together, and the screen 20 is secured by means of the coupling means 16, whereby the telescopic pole means 12 is held in place by means of tension.

In Fig. 2, there is disclosed the embodiment wherein the support means 60 is provided with the recess 62 and one end of the outer tube 12₂ is provided with the projection 64. Although not disclosed in any figure, the object with the present invention is also achieved with an embodiment, wherein the support means 60 is provided with the projection 64, and one end of the outer tube 12₂ is provided with the recess 62.

In one preferred embodiment of the display means 1 according to the present invention, the recess 62 is symmetrical in relation to a central axis thereof. A cross section area of the recess 62 perpendicular to the central axis has its maximum value at one end of said recess 62 and decreases when moving along the central axis away from the one end of the recess 62.

In another preferred embodiment of the display means 1 according to the present invention, the recess 62 has a conical shape, as is the case in Fig. 2.

In one preferred embodiment of the display means 1 according to the present invention, the friction means 66 is a friction plate 66, as is the case in figure 2. The friction plate 66 can either be affixed on the first part 11, or on the outer tube 12₂.

In yet another preferred embodiment of the display means 1 according to the present invention, the friction plate 66 is provided with an adjustable threaded connection to either the first part 11 or the outer tube 12₂. The threaded connection can e.g. be a screw or a bolt affixed e.g. on the first part 11, and a corresponding, threaded hole arranged in the friction plate 66, so that the distance between the first part 11 and the surface of the friction plate 66 which abuts against the outer tube 12₂ can be adjusted.

In yet another preferred embodiment of the display means 1 according to the present invention, the friction means 66 is a friction tube (not disclosed) affixed on the outer tube 12₂.

According to another embodiment, the friction tube has an increasing diameter.

As is apparent in figure 2, the telescopic pole means 12 is adjusted to the height H₁. The pole means 12 is tightened between the fastening of the screen, and the recess 62 and the friction plate 66. If the screen 20 is pulled up to the height H₂, the screen 20 will be leaning forward due to the fact that the tension force increases and more "weight of the screen" is moved forward. Also the pole means 12 will then bend forward.

A similar effect is also achieved if the thickness of the screen 20 is increased. A wider first part 11 means a wider screen 20 and a similar effect. In this context it would be a further advantage if said friction plate 66 could be adjusted.

In order to be able to move a fully assembled display means 1, the friction force exerted by said friction means 66 has to be large enough. The necessary friction force depends i. a. on the weight of the support means 60 and the first part 11, and the length of the pole means 12 in the assembled state.

It will be understood that the invention is not restricted to the above mentioned embodiments, and that a person skilled in the art will be aware of that many modifications are possible within the scope of the accompanying claims.

## Claims

1. A display means (1) comprising a stand (10) adapted to secure a screen (20), wherein said stand (10) comprises a first part (11) which supports against an underlying supportive surface (u) and comprises a bobbin (40) enclosed in a cavity in said first part (11), wherein said screen (20) can be wounded onto and withdrawn from said bobbin (40), wherein said stand also comprises a support means (60) which in a support mode is arranged perpendicular in relation to the lengthwise direction of said first part (11) and supports against said surface (u), wherein said stand (10) also comprises a foldable pole means (12) or a telescopic pole means (12) comprising an inner tube (12₁) and an outer tube (12₂), which tubes (12₁, 12₂) telescopically can be moved in relation to each other, a coupling means (16) arranged at a first end of said inner tube (12₁) and operable to secure said screen (20) when it is at least partly withdrawn from said bobbin (40), and wherein one of said support means (60) and one end of said outer tube (12₂) is provided with a recess (62) and the other is provided with a projection (64), wherein the shapes of said recess (62) and said projection (64) essentially are complementary, **characterized in that** said stand (10) also comprises a lock means (14) arranged on said inner tube (12₁) and operable to releasable lock said tubes (12₁, 12₂) in relation to each other, and **in that** said stand (10) also comprises a friction means (66) either in the form of a friction tube (66) affixed on said outer tube (12₂) or in the form of a friction plate (66), and operable to exert a friction force between said first part (11) and said outer tube (12₂) when said recess (62) and said projection (64) are fitted together, and said screen (20) is secured by means of said coupling means (16), whereby said telescopic pole means (12) is held in place by means of tension.

2. A display means (1) according to claim 1, **characterized in that** said recess (62) is symmetrical in relation to a central axis thereof, and **in that** a cross section area of said recess (62) perpendicular to said central axis has its maximum value at one end of said recess (62) and decreases when moving along said central axis away from said one end of said recess (62).

3. A display means (1) according to claim 2, **characterized in that** said recess (62) has a conical shape.

4. A display means (1) according to any one of claims 1-3, **characterized in that** said recess (62) is provided in said support means (60).

5. A display means (1) according to any one of claims 1-3, **characterized in that** said recess (62) is provided in said outer tube (12₂).

6. A display means (1) according to any one of claims 1-5, **characterized in that** said friction plate (66) is affixed on said first part (11).

7. A display means (1) according to any one of claims 1-5, **characterized in that** said friction plate (66) is affixed on said outer tube (12₂).

8. A display means (1) according to any one of claims 1-5, **characterized in that** said friction tube (66) has an increasing diameter.

9. A display means (1) according to any one of claims 1-7, **characterized in that** said friction plate (66) is provided with an adjustable threaded connection to either said first part (11) or said outer tube (12₂).

## Patentansprüche

1. Anzeigemittel (1), umfassend einen Ständer (10), der angepasst ist, eine Stellwand (20) zu sichern, wobei der Ständer (10) einen ersten Teil (11) umfasst, der gegen eine darunter liegende Stützfläche (u) stützt und eine Spule (40) umfasst, die in einem Hohlraum in dem ersten Teil (11) eingeschlossen ist, wobei die Stellwand (20) auf die Spule (40) gerollt und von ihr abgerollt werden kann, wobei der Ständer auch ein Stützmittel (60) umfasst, das in einem Stützmodus senkrecht in Bezug zur Längsrichtung des ersten Teils (11) angeordnet ist und gegen die Fläche (u) stützt, wobei der Ständer (10) außerdem ein faltbares Mastmittel (12) oder ein teleskopisches Mastmittel (12) umfasst, umfassend ein inneres Rohr (12₁) und ein äußeres Rohr (12₂), wobei die Rohre (12₁, 12₂) teleskopisch in Bezug zueinander bewegt werden können, ein Kupplungsmittel (16), das an einem ersten Ende des inneren (12₁) Rohrs angeordnet ist und betriebsfähig ist, die Stellwand (20) zu sichern, wenn sie zumindest teilweise von der Spule (40) abgerollt ist, und wobei eines der Stützmittel (60) und ein Ende des äußeren Rohrs (12₂) mit einer Aussparung (62) versehen ist und das andere mit einem Vorsprung (64) versehen ist, wobei die Formen der Aussparung (62) und des Vorsprungs (64) im Wesentlichen komplementär sind, **dadurch gekennzeichnet, dass** der Ständer (10) auch ein Verriegelungsmittel (14) umfasst, das an dem inneren Rohr (12₁) angeordnet ist und betriebsfähig ist, die Rohre (12₁, 12₂) in Bezug zueinander lösbar zu verriegeln, und **dadurch**, dass der Ständer (10) auch ein Reibmittel (66) entweder in Form eines Reibrohrs (66), das an dem äußeren Rohr (12₂) befestigt ist, oder in Form einer Reibplatte (66) umfasst, und betriebsfähig ist, eine Reibungskraft zwischen dem ersten Teil (11) und dem äußeren Rohr (12₂) auszuüben, wenn die Aussparung (62) und der Vorsprung (64) ineinander eingepasst sind, und die Stellwand (20) mittels des Kupplungmittels (16) gesichert ist, wobei das teleskopische Mastmittel (12) mittels Spannung am Platz gehalten wird.

2. Anzeigemittel (1) nach Anspruch 1, **dadurch gekennzeichnet, dass** die Aussparung (62) in Bezug zu einer Mittelachse davon symmetrisch ist, und dass eine Querschnittfläche der Aussparung (62), die senkrecht zu der Mittelachse ist, ihren Maximalwert an einem Ende der Aussparung (62) hat und beim Bewegen entlang der Mittelachse weg von dem einen Ende der Aussparung (62) abnimmt.

3. Anzeigemittel (1) nach Anspruch 2, **dadurch gekennzeichnet, dass** die Aussparung (62) eine konische Form aufweist.

4. Anzeigemittel (1) nach einem der Ansprüche 1- 3, **dadurch gekennzeichnet, dass** die Aussparung (62) in dem Stützmittel (60) vorgesehen ist.

5. Anzeigemittel (1) nach einem der Ansprüche 1- 3, **dadurch gekennzeichnet, dass** die Aussparung (62) in dem äußeren Rohr (12₂) vorgesehen ist.

6. Anzeigemittel (1) nach einem der Ansprüche 1- 5, **dadurch gekennzeichnet, dass** die Reibplatte (66) an dem ersten Teil (11) befestigt ist.

7. Anzeigemittel (1) nach einem der Ansprüche 1- 5, **dadurch gekennzeichnet, dass** die Reibplatte (66) an dem äußeren Rohr (12₂) befestigt ist.

8. Anzeigemittel (1) nach einem der Ansprüche 1- 5, **dadurch gekennzeichnet, dass** das Reibrohr (66) einen zunehmenden Durchmesser aufweist.

9. Anzeigemittel (1) nach einem der Ansprüche 1- 7, **dadurch gekennzeichnet, dass** die Reibplatte (66) mit einer einstellbaren Gewindeverbindung an entweder dem ersten Teil (11) oder dem äußeren Rohr (12₂) versehen ist.

## Revendications

1. Moyen d'affichage (1) comprenant un pied (10) adapté pour fixer un écran (20), dans lequel ledit pied (10) comprend un premier composant (11) qui appuie contre une surface de soutien sous-jacente (u) et comprend une bobine (40) enfermée dans une cavité dans ledit premier composant (11), dans lequel ledit écran (20) peut être enroulé sur et tiré de ladite bobine (40), dans lequel ledit pied comprend également un moyen de support (60) qui, dans un mode de support, est placé perpendiculairement par rapport à la direction longitudinale dudit premier composant (11) et appuie contre ladite surface (u), dans lequel ledit pied (10) comprend également un moyen de mât pliable (12) ou un moyen de mât télescopique (12) comprenant un tube intérieur (12₁) et un tube extérieur (12₂), lesquels tubes (12₁, 12₂) peuvent être déplacés de manière télescopique l'un par rapport à l'autre, un moyen de couplage (16) placé à une première extrémité dudit tube intérieur (12₁) et utilisable pour fixer ledit écran (20) quand il est au moins partiellement tiré de ladite bobine (40), et dans lequel l'un desdits moyens de support (60) et une extrémité dudit tube extérieur (12₂) est pourvu d'un évidement (62) et l'autre est pourvu d'une saillie (64), dans lequel les formes dudit évidement (62) et de ladite saillie (64) sont essentiellement complémentaires, **caractérisé en ce que** ledit pied (10) comprend également un moyen de verrouillage (14) placé sur ledit tube intérieur (12₁) et utilisable pour verrouiller de manière amovible lesdits tubes (12₁, 12₂) l'un par rapport à l'autre, et **en ce que** ledit pied (10) comprend également un moyen de frottement (66) soit sous forme d'un tube de frottement (66) fixé sur ledit tube extérieur (12₂) soit sous forme d'une plaque de frottement (66), et utilisable pour exercer une force de frottement entre ledit premier composant (11) et ledit tube extérieur (12₂) quand ledit évidement (62) et ladite saillie (64) sont ajustés l'un à l'autre, et ledit écran (20) est fixé au moyen dudit moyen de couplage (16), ce par quoi ledit moyen de mât télescopique (12) est maintenu en place par tension.

2. Moyen d'affichage (1) selon la revendication 1, **caractérisé en ce que** ledit évidement (62) est symétrique par rapport à un axe central de celui-ci, et **en ce qu'**une surface de coupe transversale dudit évidement (62) perpendiculaire audit axe central présente sa valeur maximum à une extrémité dudit évidement (62) et diminue en se déplaçant le long dudit axe central en s'éloignant de ladite une extrémité dudit évidement (62).

3. Moyen d'affichage (1) selon la revendication 2, **caractérisé en ce que** ledit évidement (62) présente une forme conique.

4. Moyen d'affichage (1) selon l'une quelconque des revendications 1 à 3, **caractérisé en ce que** ledit évidement (62) est fourni dans ledit moyen de support (60).

5. Moyen d'affichage (1) selon l'une quelconque des revendications 1 à 3, **caractérisé en ce que** ledit évidement (62) est fourni dans ledit tube extérieur (12₂).

6. Moyen d'affichage (1) selon l'une quelconque des revendications 1 à 5, **caractérisé en ce que** ladite plaque de frottement (66) est fixée sur ledit premier composant (11).

7. Moyen d'affichage (1) selon l'une quelconque des revendications 1 à 5, **caractérisé en ce que** ladite plaque de frottement (66) est fixée sur ledit tube extérieur (12₂).

8. Moyen d'affichage (1) selon l'une quelconque des revendications 1 à 5, **caractérisé en ce que** ledit tube de frottement (66) présente un diamètre augmentant.

9. Moyen d'affichage (1) selon l'une quelconque des revendications 1 à 7, **caractérisé en ce que** ladite plaque de frottement (66) est pourvue d'un raccord fileté ajustable soit audit premier composant (11) soit audit tube extérieur (12₂).
